# EUROPÄISCHE PATENTSCHRIFT

(11) **EP 2 616 872 B1**
(45) Veröffentlichungstag und Bekanntmachung des Hinweises auf die Patenterteilung: **24.12.2014**
(21) Anmeldenummer: 11771047.5
(22) Anmeldetag: 16.09.2011
(51) Int. Cl.: G02B 27/01, B60K 37/02

(54) **HEAD-UP-DISPLAY MIT EINEM PROJEKTIONSSCHIRM UND EINER VORRICHTUNG ZUR BEWEGUNG UND POSITIONIERUNG EINES PROJEKTIONSSCHIRMS UND VERFAHREN ZUM BETRIEB EINES SOLCHEN HEAD-UP-DISPLAYS**
HEAD-UP DISPLAY COMPRISING A PROJECTION SCREEN AND A DEVICE FOR MOVING AND POSITIONING A PROJECTION SCREEN, AND METHOD FOR OPERATING SUCH A HEAD-UP DISPLAY
AFFICHAGE TÊTE HAUTE COMPRENANT UN ÉCRAN DE PROJECTION ET UN DISPOSITIF POUR DÉPLACER ET POSITIONNER UN ÉCRAN DE PROJECTION ET PROCÉDÉ POUR FAIRE FONCTIONNER UN AFFICHAGE TÊTE HAUTE DE CE TYPE

(30) Priorität: 18.09.2010 DE 102010046008
(43) Veröffentlichungstag der Anmeldung: 24.07.2013
(73) Patentinhaber: Johnson Controls GmbH, 51399 Burscheid (DE)
(72) Erfinder: HOPF, Christian, 35578 Wetzlar (DE); NOEL, Alexander, 35410 Hungen-Nonnenroth (DE); RUMPF, Horst, 35745 Herborn (DE)
(74) Vertreter: Finger, Catrin
(86) Internationale Anmeldenummer: PCT/EP2011/066082
(87) Internationale Veröffentlichungsnummer: WO 2012/035134

(56) Entgegenhaltungen:
- WO-A2-2008/063632
- US-A- 5 237 455
- US-A- 5 457 575
- US-A1- 2008 285 138

## Beschreibung

Die Erfindung betrifft ein Head-up-Display mit einem Projektionsschirm und einer Vorrichtung zur Bewegung und Positionierung eines Projektionsschirms nach den Merkmalen des Oberbegriffs des Anspruchs 1. Weiterhin betrifft die Erfindung ein Verfahren zum Betrieb eines solchen Head-up-Displays nach den Merkmalen des Oberbegriffs des Anspruchs 4.

Derartige Head-up-Displays sind allgemein aus dem Stand der Technik bekannt und umfassen eine Anzeigeeinheit mit einem Projektionsschirm, auf welchen mittels einer bildgebenden Einheit und gegebenenfalls mittels eines Optikmoduls Fahrzeuginformationen projiziert werden. Der Projektionsbildschirm ist dabei transparent ausgebildet und im Sichtfeld des Fahrzeugführers angeordnet.

Während eines deaktivierten Zustands des Head-up-Displays ist dieses insbesondere in einen Hohlraum innerhalb einer Armaturentafel eines Fahrzeugs unterhalb von deren Oberfläche einfahrbar und bei gewünschter Benutzung aus diesem Hohlraum ausfahrbar.

Es ist erforderlich, insbesondere in Abhängigkeit von einer Größe und daraus folgenden Sitzposition des Fahrzeugführers, eine Neigung des Projektionsschirms um eine horizontal verlaufende Neigungsachse einzustellen, um eine optimierte Anzeige für den Fahrzeugführer zu schaffen, welche sich insbesondere durch eine geometrisch sauber entzerrte Darstellung der Informationen auszeichnet. Hierbei ist eine sehr feine Einstellung erforderlich. Gleichzeitig ist eine sichere Fixierung des Projektionsschirms in der eingestellten Position erforderlich, um eine Änderung der Position während des Betriebs des Head-up-Displays zu vermeiden.

Weitere Head-up-Displays sind aus der gattungsbildenden US 2008/0285138 A1, sowie aus der WO 2008/063632 A2, US 5,237,455 A und US 5,457,575 A bekannt.

Der Erfindung liegt die Aufgabe zugrunde, ein verbessertes Head-up-Display mit einem Projektionsschirm und einer Vorrichtung zur Bewegung und Positionierung eines Projektionsschirms und ein verbessertes Verfahren zum Betrieb eines solchen Head-up-Displays anzugeben.

Hinsichtlich des Head-up-Display wird die Aufgabe erfindungsgemäß mit den Merkmalen des Anspruchs 1 gelöst.

Hinsichtlich des Verfahrens wird die Aufgabe erfindungsgemäß mit den Merkmalen des Anspruchs 4 gelöst.

Bevorzugte Ausgestaltungen und Weiterbildungen der Erfindung sind in den abhängigen Ansprüchen angegeben.

Beim Head-up-Display mit einem Projektionsschirm und einer Vorrichtung zur Bewegung und Positionierung des Projektionsschirms ist erfindungsgemäß zum Ausfahren oder Einfahren des Projektionsschirms mittels der Vorrichtung eine lineare Bewegung mit kleinem Weg in eine Schwenkbewegung mit großem Weg transformierbar, wobei in Betriebsposition des Projektionsschirms mittels der Vorrichtung eine Neigungsverstellung des Projektionsschirms aktuierbar ist. Dadurch ist vorteilhafterweise ein Head-up-Display ermöglicht, welches sich durch einen besonders geringen Bauraumbedarf auszeichnet und gleichzeitig einfach realisierbar ist.

Besonders vorteilhafterweise kann mittels einer einzelnen Antriebseinheit sowohl das Ausfahren oder Einfahren des Projektionsschirms als auch eine Neigungsverstellung des Projektionsschirms in Betriebsposition aktuiert werden.

Die Vorrichtung ist mittels einer Antriebseinheit bewegbar, welche bevorzugt als Schrittmotor ausgebildet ist.

Zweckmäßigerweise ist die Antriebseinheit mechanisch mit einem Schlitten gekoppelt, wobei eine Drehbewegung der Antriebseinheit in eine lineare Bewegung des Schlittens in einer Führungsschiene transformierbar ist. Dabei sind zumindest zwei Führungsstifte am Schlitten angeordnet, welche in die Führungsschiene eingreifen und Endanschläge des Schlittens innerhalb der Führungsschiene bilden.

Der Schlitten ist mittels eines Verbindungsstifts mechanisch mit einem Transformationselement gekoppelt, wobei der Verbindungsstift in ein in das Transformationselement eingebrachtes Langloch eingreift und das Transformationselement um eine gestellfeste erste Rotationsachse dreh- oder schwenkbar gelagert ist.

Das Transformationselement und das Grundelement sind bevorzugter weise mittels einer zweiten Rotationsachse dreh- oder schwenkbar miteinander gekoppelt, wobei das Grundelement gestellfest am Projektionsschirm angeordnet ist.

Ein Hebelelement ist vorteilhafterweise endseitig mittels einer dritten Rotationsachse mit dem Grundelement dreh- oder schwenkbar gekoppelt, wobei das Hebelelement an der der dritten Rotationsachse abgewandten Seite endseitig dreh- oder schwenkbar an einer gestellfesten vierten Rotationsachse gelagert ist.

Endseitig ist an der zweiten Rotationsachse ein Stiftelement angeordnet, welches in Betriebsposition des Projektionsschirms in Wirkverbindung mit einem Positionierelement steht, wobei in das Positionierelement eine Führungsstruktur eingebracht ist.

In Betriebsposition des Projektionsschirms bewirkt eine Bewegung des Schlittens mittels der Antriebseinheit eine Schwenkung des Projektionsschirms um die Rotationsachse und eine daraus resultierende Neigungsverstellung des Projektionsschirms.

Beim Verfahren zum Betrieb eines erfindungsgemäßen Head-up-Displays wird mittels der Vorrichtung eine lineare Bewegung mit kleinem Weg in eine Schwenkbewegung mit großem Weg transformiert, wobei in Betriebsposition des Projektionsschirms mittels der Vorrichtung eine Neigung des Projektionsschirms eingestellt wird. Daraus resultiert in besonders vorteilhafter Weise, dass lediglich ein geringer Bauraumbedarf zur Integration des Head-up-Displays ins Fahrzeug erforderlich ist. Gleichzeitig ist es möglich, dass ein optischer Pfad zwischen der bildgebenden Einheit und dem Projektionsschirm sehr kurz ist. Daraus resultiert wiederum in vorteilhafter Weise, dass eine Qualität der Darstellung der Informationen auf dem Projektionsschirm verbessert wird. Insbesondere werden eine höhere Schärfe, Helligkeit und Kontrast erreicht.

Besonders vorteilhafterweise wird der Projektionsschirm in Ruheposition vollständig innerhalb einer Armaturentafel angeordnet.

Der Projektionsschirm wird zweckmäßigerweise in Betriebsposition aus der Armaturentafel herausbewegt und derart positioniert, dass dieser sich in einem optischen Pfad der bildgebenden Einheit befindet.

Ausführungsbeispiele der Erfindung werden im Folgenden anhand von Zeichnungen näher erläutert.

Dabei zeigen:
- Figur 1: schematisch ein erfindungsgemäßes Head-up-Display mit einer Vorrichtung zur Bewegung und Positionierung eines Projektionsschirms in einer perspektivischen Ansicht, und
- Figur 2: eine weitere schematische Darstellung des Head-up-Displays.

Einander entsprechende Teile sind in allen Figuren mit den gleichen Bezugszeichen versehen.

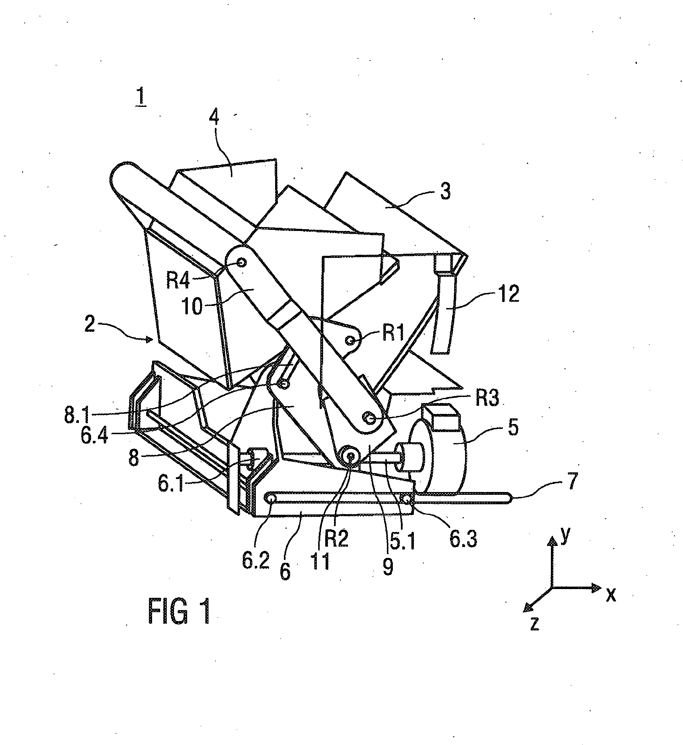

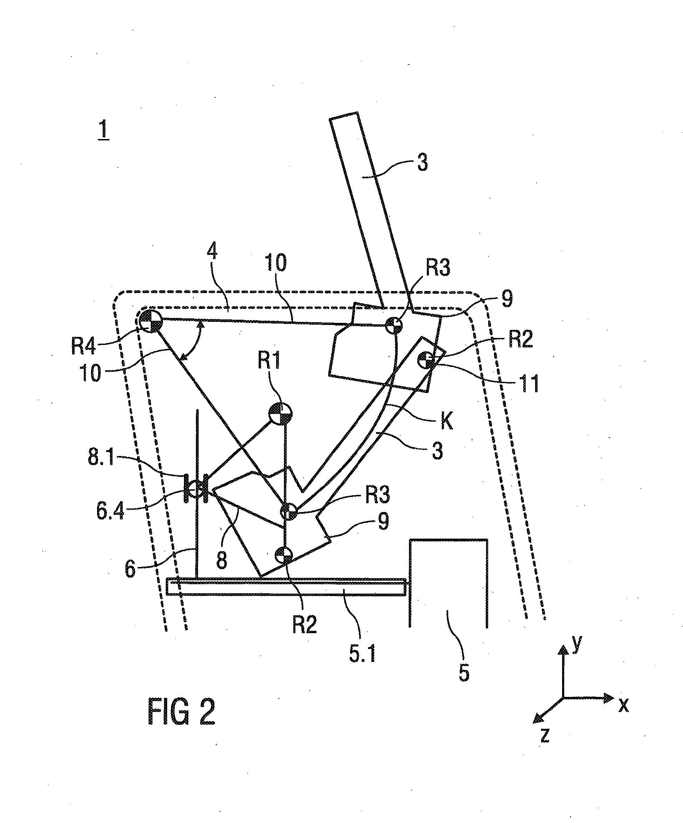

In Figur 1 ist ein erfindungsgemäßes Head-up-Display 1 mit einer Vorrichtung 2 zur Bewegung und Positionierung eines Projektionsschirms 3 Head-up-Displays 1 in einer perspektivischen Ansicht dargestellt. Figur 2 zeigt das Head-up-Display 1 und den Bewegungsverlauf des Projektionsschirms 3 in einer schematischen Darstellung. Die Erfindung wird im Folgenden anhand beider Figuren gemeinsam erläutert.

Das Head-up-Display 1 umfasst neben dem Projektionsschirm 3 eine bildgebende Einheit 4, mittels welcher die anzuzeigenden Informationen auf den Projektionsschirm 3 projiziert werden. Das Head-up-Display 1 ist vorzugsweise in nicht näher dargestellter Weise in einem Hohlraum einer Armaturentafel eines Fahrzeugs befestigt, wobei der Projektionsschirm 3 derart ausgebildet und angeordnet ist, dass dieser vollständig verfahrbar ist. Das heißt, der Projektionsschirm 3 ist in den Hohlraum der Armaturentafel unterhalb von deren Oberfläche einfahrbar und bei gewünschter Benutzung des Head-up-Displays 1 aus diesem Hohlraum ausfahrbar. Beim Ausfahren aus dem Hohlraum wird der Projektionsschirm 3 derart positioniert, dass dieser sich in einen optischen Pfad der bildgebenden Einheit 4 befindet.

Zur Bewegung des Projektionsschirms 3 beim Ein- und Ausfahren und zur Positionierung des Projektionsschirms 3 ist die Vorrichtung 2 vorgesehen.

Die Vorrichtung 2 umfasst eine Antriebseinheit 5, wobei die Antriebseinheit 5 insbesondere als Elektromotor, vorzugsweise als Schrittmotor ausgebildet ist. Die Antriebseinheit 5 weist eine drehbare Welle 5.1 auf, in deren Oberfläche die Welle 5.1 vollständig umgebende Schraubengänge eingebracht sind.

Die Welle 5.1 ist mit einem in x-Richtung verschiebbar angeordneten Schlitten 6 gekoppelt, wobei der Schlitten 6 ein Koppelelement 6.1 mit einer zu der Welle 5.1 korrespondierenden Bohrung aufweist. Innerhalb der Bohrung sind Schraubengänge eingebracht, welche mit den Schraubengängen der Welle 5.1 korrespondieren. Die Schraubengänge sind dabei derart angeordnet, dass bei einer Drehbewegung der Welle 5.1 um deren Längsachse eine lineare Bewegung des Schlittens 6 in einer Führungsschiene 7 erfolgt. Zu dieser Führung umfasst der Schlitten 6 zwei Führungsstifte 6.2, 6.3, welche in die Führungsschiene 7 eingreifen. Die Führungsstifte 6.2, 6.3 bilden gleichzeitig Endanschläge des Schlittens 6 innerhalb der Führungsschiene 7.

Mit dem Schlitten 6 ist über einen Verbindungsstift 6.4 ein Transformationselement 8 gekoppelt, wobei der Verbindungsstift 6.4 in ein in das Transformationselement 8 eingebrachtes Langloch 8.1 greift. Das Transformationselement 8 ist über eine gehäusefeste erste Rotationsachse R1 drehbar innerhalb des Head-up-Displays 1 gelagert.

Das Transformationselement 8 ist wiederum mit einem Grundelement 9 gekoppelt, an welchen der Projektionsschirm 3 befestigt ist. Das Transformationselement 8 und das Grundelement 9 sind dabei über eine zweite Rotationsachse R2 drehbar miteinander verbunden.

Mit dem Grundelement 9 ist ein Hebelelement 10 über eine dritte Rotationsachse R3 verbunden, wobei das Hebelelement 10 an der der Rotationsachse R3 abgewandten Seite drehbar an einer gehäusefest im Head-up-Display 1 befestigten vierten Rotationsachse R4 gelagert ist.

Beim Ausfahren des Projektionsschirms 3 wird der Schlitten 6 mittels der Welle 5.1 der Antriebseinheit 5 in x-Richtung bewegt. Dabei wird das Transformationselement 8 aufgrund der Kopplung mit dem Schlitten 6 über den Verbindungsstift 6.4 um die erste Rotationsachse R1 geschwenkt, so dass die lineare Bewegung des Schlittens 6 in eine Drehbewegung transformiert wird. Gleichzeitig wird das Grundelement 9 auf einer von dem in der vierten Rotationsachse R4 drehbar gelagerten Hebelement 10 vorgegebenen Kreisbahn K in y-Richtung bewegt. Somit wird der Projektionsschirm 3 in den optischen Pfad der bildgebenden Einheit 4 bewegt.

Wenn der Projektionsschirm 3 und das Grundelement 9 eine obere Endposition erreicht haben, steht ein endseitig an der zweiten Rotationsachse R2 angeordnetes Stiftelement 11 in Wirkverbindung mit einem Positionierelement 12. Das Stiftelement 11 und das Positionierelement 12 sind dabei derart ausgebildet, dass durch weitere Bewegung des Schlittens 6 mittels der Antriebseinheit 5 eine Neigung des Projektionsschirms 3 einstellbar ist. Zu diesem Zweck umfasst das Positionierelement 12 in nicht näher dargestellter Weise eine Führungsstruktur, in welcher das Stiftelement 11 derart geführt wird, dass der Projektionsschirm 3 in der oberen Endposition um die dritte Rotationsachse R3 geschwenkt wird. Die Führungsstruktur ist dabei in der Art ausgebildet, dass das Schwenken um die Rotationsachse R3 sehr exakt vorgebbar ist, so dass die Neigungseinstellung sehr fein, stufenlos und sehr exakt durchführbar ist.

Aus dem Aufbau des Head-up-Displays 1 und der Vorrichtung 2 resultiert in vorteilhafter Weise, dass trotz eines sehr kleinen Bauraumbedarfs des Head-up-Displays 1 mit der Vorrichtung 2 gleichzeitig das Ein- und Ausfahren des Projektionsschirms 3 aus dem Hohlraum der Armaturentafel und ein Schwenken des Projektionsschirms 3 zur Einstellung von dessen Neigung realisierbar sind. Besonders vorteilhaft ist weiterhin, dass hierzu lediglich die eine Antriebseinheit 5 erforderlich ist.

### Bezugszeichenliste

- 1: Head-up-Display
- 2: Vorrichtung
- 3: Projektionsschirm
- 4: bildgebende Einheit
- 5: Antriebseinheit
- 5.1: Welle
- 6: Schlitten
- 6.1: Koppelelement
- 6.2: Führungsstift
- 6.3: Führungsstift
- 6.4: Verbindungsstift
- 7: Führungsschiene
- 8: Transformationselement
- 8.1: Langloch
- 9: Grundelement
- 10: Hebelelement
- 11: Stiftelement
- 12: Positionierelement

- K: Kreisbahn
- R1: erste Rotationsachse
- R2: zweite Rotationsachse
- R3: dritte Rotationsachse
- R4: vierte Rotationsachse
- x, y, z: kartesische Koordinatenrichtungen

## Patentansprüche

1. Head-up-Display (1) mit einem Projektionsschirm (3) und einer Vorrichtung (2) zur Bewegung und Positionierung des Projektionsschirms (3), wobei zum Ausfahren oder Einfahren des Projektionsschirms (3) mittels der Vorrichtung (2) eine lineare Bewegung mit kleinem Weg in eine Schwenkbewegung mit großem Weg transformierbar ist, wobei die Vorrichtung (2) mittels einer Antriebseinheit (5) bewegbar ist, wobei in Betriebsposition des Projektionsschirms (3) mittels der Vorrichtung (2) eine Neigungsverstellung des Projektionsschirms (3) aktuierbar ist, wobei die Antriebseinheit (5) mechanisch mit einem Schlitten (6) gekoppelt ist und wobei eine Drehbewegung der Antriebseinheit (5) in eine lineare Bewegung des Schlittens (6) in einer Führungsschiene (7) transformierbar ist,
**dadurch gekennzeichnet, dass**
der Schlitten (6) mittels eines Verbindungsstifts (6.4) mechanisch mit einem Transformationselement (8) gekoppelt ist, wobei der Verbindungsstift (6.4) in ein in das Transformationselement (8) eingebrachtes Langloch (8.1) eingreift und das Transformationselement (8) um eine gestellfeste erste Rotationsachse (R1) dreh- oder schwenkbar gelagert ist, wobei das Transformationselement (8) und ein Grundelement (9) mittels einer zweiten Rotationsachse (R2) dreh- oder schwenkbar miteinander gekoppelt sind, wobei das Grundelement (9) gestellfest am Projektionsschirm (3) angeordnet ist und ein Hebelelement (10) endseitig mittels einer dritten Rotationsachse (R3) mit dem Grundelement (9) dreh- oder schwenkbar gekoppelt und an der einer dritten Rotationsachse (R3) abgewandten Seite endseitig dreh- oder schwenkbar an einer gestellfesten vierten Rotationsachse (R4) gelagert ist, wobei endseitig an der zweiten Rotationsachse (R2) ein Stiftelement (11) angeordnet ist, welches in Betriebsposition des Projektionsschirms (3) in Wirkverbindung mit einem Positionierelement (12) steht, in das eine Führungsstruktur eingebracht ist, wobei in Betriebsposition des Projektionsschirms (3) eine Bewegung des Schlittens (6) mittels der Antriebseinheit (5) eine Schwenkung des Projektionsschirms (3) um die Rotationsachse (R3) und eine daraus resultierende Neigungsverstellung des Projektionsschirms (3) bewirkt.

2. Head-up-Display (1) nach Anspruch 1,
**dadurch gekennzeichnet, dass** die Antriebseinheit (5) als Schrittmotor ausgebildet ist.

3. Head-up-Display (1) nach Anspruch 1 oder 2,
**dadurch gekennzeichnet, dass** zumindest zwei Führungsstifte (6.2, 6.3) am Schlitten (6) angeordnet sind, welche in die Führungsschiene (7) eingreifen und Endanschläge des Schlittens (6) innerhalb der Führungsschiene (7) bilden.

4. Verfahren zum Betrieb eines Head-up-Displays (1) nach einem der vorhergehenden Ansprüche, wobei zum Ausfahren oder Einfahren des Projektionsschirms (3) mittels der Vorrichtung (2) eine lineare Bewegung mit kleinem Weg in eine Schwenkbewegung mit großem Weg transformiert wird, wobei in Betriebsposition des Projektionsschirms (3) mittels der Vorrichtung (2) eine Neigung des Projektionsschirms (3) eingestellt wird.

5. Verfahren nach Anspruch 4,
**dadurch gekennzeichnet, dass** der Projektionsschirm (3) in Ruheposition vollständig innerhalb einer Armaturentafel angeordnet wird.

6. Verfahren nach Anspruch 4 oder 5,
**dadurch gekennzeichnet, dass** der Projektionsschirm (3) in Betriebsposition aus der Armaturentafel herausbewegt und derart positioniert wird, dass dieser sich in einem optischen Pfad der bildgebenden Einheit (4) befindet.

## Claims

1. A head-up display (1) comprising a projection screen (3) and a device (2) for moving and positioning the projection screen (3), wherein in order to extend or retract the projection screen (3), by means of the device (2), a linear movement with a short path can be transformed into a pivoting movement with a long path, wherein the device (2) can be moved by means of a drive unit (5), an adjustment of the incline of the projection screen (3) being actuatable by means of the device (2) when the projection screen (3) is in the operating position, wherein the drive unit (5) is mechanically coupled to a slide (6) and wherein a rotating motion of the drive unit (5) can be transformed into a linear movement of the slide (6) in a guide rail (7),
**characterized in that**
the slide (6) is mechanically coupled to a transformation element (8) by means of a connecting pin (6.4), the connecting pin (6.4) projecting into a slotted hole (8.1) located in the transformation element (8), and the transformation element (8) being rotatably or pivotably mounted about a fixed first rotation axle (R1), wherein the transformation element (8) and a base element (9) are rotatably or pivotably coupled to one another by means of a second rotation axle (R2), the base element (9) being fixedly mounted on the projection screen (3), wherein a lever element (10) is rotatably or pivotably coupled at its end to the base element (9) by means of a third rotation axle (R3) and rotatably or pivotably mounted at its end on the side remote from the rotation axle (R3) on a fixed fourth rotation axle (R4), wherein a pin element (11) is located on the end of the second rotation axle (R2), which pin element, in the operating position of the projection screen (3), is in functional connection with a positioning element (12), into which a guide structure is integrated, wherein in the operating position of the projection screen (3) a movement of the slide (6) by means of the drive unit (5) causes a pivoting of the projection screen (3) about the rotation axle (R3) and a resulting adjustment of the incline of the projection screen (3).

2. The head-up display (1) as claimed in claim 1, **characterized in that** the drive unit (5) is embodied as a stepper motor.

3. The head-up display (1) as claimed in claim 1 or 2, **characterized in that** at least two guide pins (6.2, 6.3) are located on the slide (6) which project into the guide rail (7) and embody end stops for the slide (6) within the guide rail (7).

4. A method for operating a head-up display (1) according to one of the preceding claims, wherein in order to extend or retract the projection screen (3), by means of the device (2), a linear movement with a short path is transformed into a pivoting movement with a long path, an incline of the projection screen (3) being adjusted by means of the device (2) when the projection screen (3) is in the operating position.

5. The method as claimed in claim 4, **characterized in that** the projection screen (3) in its rest position is located entirely within an instrument panel.

6. The method as claimed in claim 4 or 5, **characterized in that** the projection screen (3) in its operating position is moved out of the instrument panel and positioned in such a way that it is located in an optical path of the image-providing unit (4).

## Revendications

1. Affichage tête haute (1) comprenant un écran de projection (3) et un dispositif (2) pour le déplacement et le positionnement de l'écran de projection (3), un mouvement linéaire de petite course pouvant être converti en un mouvement de pivotement de grande course au moyen du dispositif (2) pour faire sortir ou rentrer l'écran de projection (3), le dispositif (2) pouvant être déplacé au moyen d'une unité d'entraînement (5), un réglage d'inclinaison de l'écran de projection (3) pouvant être effectué au moyen du dispositif (2) dans la position fonctionnelle de l'écran de projection (3), l'unité d'entraînement (5) étant accouplée mécaniquement à un chariot (6) et un mouvement de rotation de l'unité d'entraînement (5) pouvant être converti en un mouvement linéaire du chariot (6) dans un rail de guidage (7),
**caractérisé en ce que**
le chariot (6) est accouplé mécaniquement à un élément de transformation (8) au moyen d'une goupille de connexion (6.4), la goupille de connexion (6.4) venant en prise dans un trou oblong (8.1) pratiqué dans l'élément de transformation (8) et l'élément de transformation (8) étant supporté de manière rotative ou pivotante autour d'un premier axe de rotation fixé au bâti (R1), l'élément de transformation (8) et un élément de base (9) étant accouplés l'un à l'autre de manière rotative ou pivotante au moyen d'un deuxième axe de rotation (R2), l'élément de base (9) étant disposé de manière fixée au bâti sur l'écran de projection (3) et un élément de levier (10) étant accouplé de manière rotative ou pivotante à l'élément de base (9) du côté de l'extrémité au moyen d'un troisième axe de rotation (R3) et étant supporté au niveau d'un quatrième axe de rotation fixé au bâti (R4) de manière rotative ou pivotante du côté de l'extrémité du côté opposé à un troisième axe de rotation (R3), un élément de goupille (11) étant disposé du côté de l'extrémité au niveau du deuxième axe de rotation (R2), lequel, dans la position fonctionnelle de l'écran de projection (3), est en liaison fonctionnelle avec un élément de positionnement (12) dans lequel est réalisée une structure de guidage, et dans la position fonctionnelle de l'écran de projection (3), un mouvement du chariot (6) au moyen de l'unité d'entraînement (5) provoquant un pivotement de l'écran de projection (3) autour de l'axe de rotation (R3) et provoquant un réglage d'inclinaison en résultant de l'écran de projection (3).

2. Affichage tête haute (1) selon la revendication 1, **caractérisé en ce que** l'unité d'entraînement (5) est réalisée sous forme de moteur pas à pas.

3. Affichage tête haute (1) selon la revendication 1 ou 2,
**caractérisé en ce qu'**au moins deux goupilles de guidage (6.2, 6.3) sont disposées au niveau du chariot (6), lesquelles viennent en prise dans le rail de guidage (7) et forment des butées de fin de course du chariot (6) à l'intérieur du rail de guidage (7).

4. Procédé pour faire fonctionner un affichage tête haute (1) selon l'une quelconque des revendications précédentes, dans lequel un mouvement linéaire de petite course est converti en un mouvement de pivotement de grande course au moyen du dispositif (2) pour faire sortir ou rentrer l'écran de projection (3), une inclinaison de l'écran de projection (3) étant ajustée au moyen du dispositif (2) dans la position fonctionnelle de l'écran de projection (3).

5. Procédé selon la revendication 4,
**caractérisé en ce que** l'écran de projection (3) est disposé complètement à l'intérieur d'un tableau de bord dans la position de repos.

6. Procédé selon la revendication 4 ou 5,
**caractérisé en ce que** l'écran de projection (3) est déplacé dans la position fonctionnelle hors du tableau de bord et est positionné de telle sorte qu'il se trouve dans un chemin optique de l'unité (4) de visualisation.
